# EUROPEAN PATENT SPECIFICATION

(11) **EP 2 484 948 B1**
(45) Date of publication and mention of the grant of the patent: **14.10.2015**
(21) Application number: 10820276.3
(22) Date of filing: 26.08.2010
(51) Int. Cl.: F16K 31/04, F16K 1/02, F16K 1/38, F16K 39/02

(54) **MOTORIZED NEEDLE VALVE**
MOTORISIERTES NADELVENTIL
ROBINET À POINTEAU MOTORISÉ

(30) Priority: 30.09.2009 JP 2009227686
(43) Date of publication of application: 08.08.2012
(73) Proprietor: Koganei Corporation, Koganei-shi Tokyo 184-8533 (JP)
(72) Inventor: OBA, Ryotaro, Koganei-shi Tokyo 184-8533 (JP)
(74) Representative: Vogel, Andreas
(86) International application number: PCT/JP2010/064512
(87) International publication number: WO 2011/040156

(56) References cited:
- FR-A5- 2 208 496
- JP-A- 10 318 382
- JP-A- 10 318 382
- JP-A- 59 077 179
- JP-A- H08 135 829
- JP-A- 2005 030 439
- JP-A- 2005 030 439
- JP-U- 57 019 273
- US-A- 3 451 416
- US-A1- 2004 004 201
- US-A1- 2007 045 580

## Description

### TECHNICAL FIELD

The present invention relates to a motorized needle valve in which a taper-shaped needle valve shaft is driven by an electric motor.

### BACKGROUND ART

A needle valve has a taper-shaped needle valve shaft which is installed so that it is reciprocally movable in an axial direction in a communicating hole through which a primary side port and a secondary side port communicate with each other. When the needle valve shaft is moved in the axial direction, a gap between a valve seat surface formed by an inner circumference surface of the communicating hole and an outer circumference surface of the needle valve shaft is changed so as to adjust a valve opening degree. The needle valve applies resistance to a flow of fluid, and is used as a flow rate control valve and a throttle valve for controlling a flow rate of the fluid supplied to an actuator, and furthermore it is used as a speed control valve for adjusting an operation speed of the actuator.

Since the needle valve shaft is provided in the communicating hole through which the primary side port and the secondary side port communicate with each other, a fluid pressure is applied in the axial direction as a resistance force when the needle valve shaft is moved in the axial direction in an adjusting manner. Patent Document 1 discloses a throttle valve in which a balancing chamber is formed in a valve body, and the fluid pressure applied to the valve body is guided into the balancing chamber to counteract the fluid pressure applied to the valve body.

### Prior Art Document

### Patent Document

Patent Document 1: Japanese Utility-Model Application Laid-Open Publication No. S51-130936

FR 2208496 discloses a valve for controlling the flow of a high-pressure fluid.

### DISCLOSURE OF THE INVENTION

### PROBLEMS TO BE SOLVED BY THE INVENTION

In an ordinary needle valve, a needle valve shaft is driven in the axial direction by manually operating a handle to adjust a valve opening degree. However, a development of a motorized needle valve for adjusting the valve opening degree automatically by a signal from the outside is desired. When the valve opening degree can be adjusted by the electric motor, the flow rate and pressure of fluid supplied to an actuator can be remotely operated, and the valve opening degree can be adjusted with a high accuracy. To reduce the size of the motorized needle valve, it is necessary to drive the needle valve shaft in the axial direction by a small-sized electric motor. However, when the needle valve shaft is driven by the small-sized electric motor with small output torque, this needle valve encounters such a problem that the needle valve shaft cannot be driven in the axial direction while resisting the fluid pressure applied to the needle valve shaft.

Since a screw shaft driven by the electric motor is necessary to be screwed to a screw hole formed on the needle valve shaft so that the needle valve shaft is driven in the axial direction by the electric motor, if the needle valve shaft is formed with a balancing chamber and a screw hole, it is not possible to reduce the needle valve shaft in diameter, and a problem arises in that enlargement of the needle valve shaft cannot be avoided.

An object of the present invention is to reduce the size of a motorized needle valve.

### MEANS FOR SOLVING THE PROBLEMS

A motorized needle valve according to the present invention comprises: a housing formed with a first port communicating with one end portion of a cylindrical communicating hole, and a second port communicating with the other end portion of the communicating hole; a needle valve shaft which is movably mounted in an axial direction in the communicating hole, and which is formed with a tapered portion changed in outer diameter in a direction from one end portion side toward the other end portion side of the communicating hole, and a gap between the tapered portion and a valve seat surface of the communicating hole is changed according to a position thereof in the axial position; a screw shaft screwed to the needle valve shaft, and rotated by an electric motor so as to drive the needle valve shaft in the axial direction; a guide provided in the housing, and the guide prevents the needle valve shaft from being rotated around its axis and permits the needle valve shaft from being moved in its axial direction; and a pressure counteracting shaft provided to a tip portion of the needle valve shaft, and provided with a pressure receiving piston which counteracts an axial thrust applied to the needle valve shaft toward the screw shaft by the fluid in one of the first and second ports.

In the motorized needle valve according to the present invention, a valve body receiving member having a cylindrical portion formed with the communicating hole is mounted in a valve body accommodating hole which is formed between the first port and the second port and make these ports communicate with each other, and the valve body receiving member is mounted with a seal member for blocking the communication between the first port and the second port. In the motorized needle valve according to the present invention, the pressure receiving piston is slidably arranged in the valve body receiving member, and the valve body receiving member is formed with a through-hole through which a pressure counteracting chamber formed in the valve body receiving member between the pressure receiving piston and the tapered portion communicates with one of the first and second ports. In the motorized needle valve according to the present invention, a sleeve is mounted in coaxial relationship with the valve body receiving member in a pressure counteracting chamber which is formed in the housing and which communicates with one of the first and second ports, and the sleeve is slidably arranged with the pressure receiving piston. In the motorized needle valve according to the present invention, the electric motor is installed in the housing.

In the motorized needle valve according to the present invention, the electric motor is detachably mounted in the housing. In the motorized needle valve according to the present invention, a rotation-preventing mechanism for preventing the screw shaft from being rotated around its axis when the electric motor is not attached to the housing is provided to the housing.

In the motorized needle valve according to the present invention, a direct-connecting hole for directly connecting the first port and the second port is formed in the housing, a check valve is mounted in the direct-connecting hole, and the direct-connecting hole is closed so as to guide a fluid to the communicating hole when the fluid is supplied from one of the ports, and the direct-connecting hole is opened so as to directly guide the fluid to one of the ports through the direct-connecting hole when the fluid is supplied from the other of the ports. In the motorized needle valve according to the present invention, a long hole penetrates the pressure counteracting shaft in its diameter direction and extending in its axial direction, and a guide for preventing the needle valve shaft from being rotated around its axis and permitting the needle valve shaft to be moved in its axial direction is formed of a rod passing through the long hole and fixed to the cylindrical portion. In the motorized needle valve according to the present invention, a flat surface extending in the axial direction is formed on an outer circumference surface of the needle valve shaft, and a guide for preventing the needle valve shaft from being rotated around its axis and permitting the needle valve shaft to be moved in its axial direction is formed of a rod mounted on the housing and brought into contact with the flat surface. In the motorized needle valve according to the present invention, a flat surface extending in the axial direction is formed on an outer circumference surface of the needle valve shaft, and a guide for preventing the needle valve shaft from being rotated around its axis and permitting the needle valve shaft to be moved in its axial direction is formed of a guide surface brought into contact with the flat surface formed in the housing.

### EFFECTS OF THE INVENTION

According to the present invention, since a pressure counteracting shaft having a pressure receiving piston is provided in the needle valve shaft mounted in the communicating hole, a thrust applied toward the screw shaft for driving the needle valve shaft by the fluid pressure in the communicating hole is almost counteracted by the pressure counteracting shaft. Thus, at the time of driving the needle valve shaft by the electric motor, with resistance against the fluid pressure applied to the needle valve shaft, since the fluid pressure applied to the needle valve shaft is small, a valve opening degree can be automatically adjusted by a small-sized electric motor with small output torque. The needle valve shaft is applied small with the fluid pressure in the communicating hole, and therefore, the valve opening degree can be set by the electric motor with high accuracy.

Since the needle valve shaft is driven by a screw shaft to which this needle valve shaft is screwed and coupled, in order to prevent the needle valve shaft from being rotated by the screw shaft when the screw shaft is rotated, a guide controls the needle valve shaft so that the needle valve shaft is driven in the axial direction without being rotated around its axis. When the electric motor for driving the screw shaft is detachably mounted on the housing of the motorized needle valve, the electric motor can be detached after the valve opening degree is adjusted, and the valve opening degree of a plurality of motorized needle valve can be adjusted by one electric motor. After the electric motor is detached, since the rotation of the screw shaft is prevented by a rotation-preventing mechanism, the set valve opening degree can be maintained even if the electric motor is detached.

When a check valve is installed in the motorized needle valve, the flow rate of the fluid supplied from one of a first port and a second port is adjusted. In contrast to this, the fluid supplied from the other port can be directly discharged to an opposite port with the flow rate being not adjusted.

### BRIEF DESCRIPTIONS OF THE DRAWINGS

FIG. 1 is a sectional view of a motorized needle valve not being part of the present invention;
FIG. 2 is a sectional view taken along a line 2-2 in FIG. 1;
FIG. 3 is a left side view of FIG. 1;
FIG. 4 is a sectional view of a motorized needle valve not being part of the present invention;
FIG. 5 is a sectional view taken along a line 5-5 in FIG. 4;
FIG. 6 is a sectional view of a portion, which corresponds to that shown in FIG. 2, in a motorized needle valve not being part of the present invention;
FIG. 7 is a sectional view of a motorized needle valve of a comparative example;
FIG. 8 is a sectional view of a motorized needle valve according to one embodiment of the present invention;
FIG. 9A is a sectional view taken along a line 9A-9A in FIG. 8;
FIG. 9B is a sectional view taken along a line 9B-9B in FIG. 8;
FIG. 10A is a sectional view taken along a line 10A-10A in FIG. 8;
FIG. 10B is a front view of a needle valve shaft shown in FIG. 8;
FIG. 11 is a sectional view of a motorized needle valve according to another embodiment of the present invention;
FIG. 12A is a sectional view of a motorized needle valve according to another embodiment of the present invention;
FIG. 12B is a sectional view taken along a line 12B-12B in FIG. 12A;
FIG. 13A is a sectional view of a motorized needle valve according to another embodiment of the present invention;
FIG. 13B is a sectional view taken along a line 13B-13B in FIG. 13A;
FIG. 14A is a sectional view of a motorized needle valve according to another embodiment of the present invention; and
FIG. 14B is a skeleton diagram of a speed reduction unit composed of a planet gear mechanism shown in FIG. 14A.

### BEST MODE FOR CARRYING OUT THE INVENTION

Hereinafter, embodiments of the present invention will be described in detail with reference to the drawings. Members common to each other in figures are denoted by the same reference numerals.

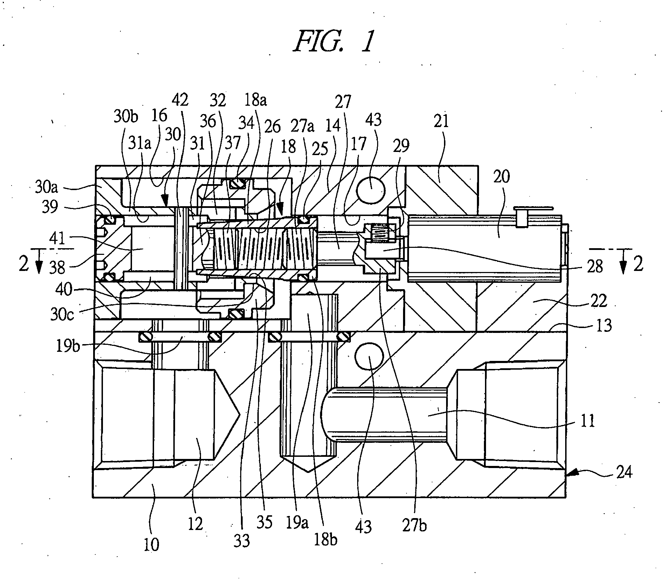

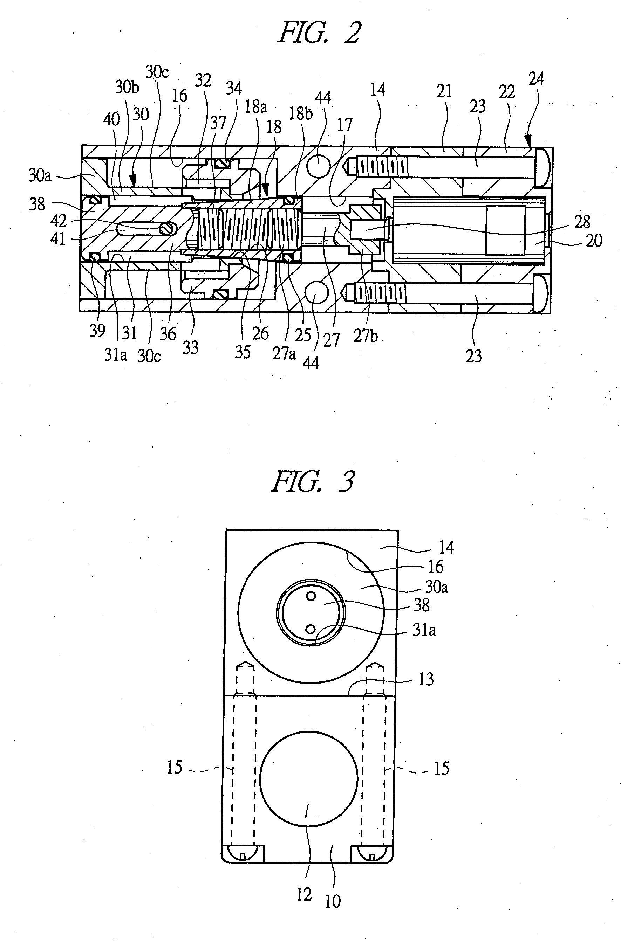

A needle valve shown in FIGS. 1 to 3 has a port block 10 composed of a generally rectangular parallelepiped member. This port block 10 is formed with a first port 11 opening on one end face thereof and a second port 12 opening on the other end face thereof. Each of the ports 11 and 12 is opened to an upper fitting surface 13 in FIG. 1. A valve case 14 is installed on the fitting surface 13. This valve case 14, as shown in FIG. 3, is fixed to the port block 10 by a bolt 15 that penetrates the port block 10. The valve case 14 is formed with a cylindrical valve body accommodating hole 16 opened to a left end face in FIG. 1. The valve body accommodating hole 16 communicates with the first port 11 on the bottom surface side, and communicates with the second port 12 on the inner peripheral surface side. The first port 11 and the second port 12 communicate with each other through the valve body accommodating hole 16. The valve case 14 is formed with a supply/discharge hole 19a that makes the first port 11 communicate with the valve body accommodating hole 16, and formed with a supply/discharge hole 19b that makes the second port 12 communicate with the valve body accommodating hole 16.

The valve case 14 is formed with a guide hole 17 which is coaxial with the valve body accommodating hole 16. This guide hole 17 penetrates to the bottom wall face of the valve body accommodating hole 16 from one end face of the valve case 14. In the guide hole 17, a base end portion of a needle valve shaft 18 is reciprocably movable in the axial direction.

A support block 21 for supporting an electric motor 20 abuts on one end face of the valve case 14, and the electric motor 20 is fixed to the support block 21 by a fixing block 22 which abuts on the support block 21. The fixing block 22 and the support block 21, as shown in FIG. 2, are fixed to the valve case 14 by bolts 23 which are screwed to the valve case 14 by penetrating these blocks.

A housing 24 of the motorized needle valve is formed by the port block 10, the valve case 14, the support block 21, and the fixing block 22.

The needle valve shaft 18 has a tapered portion 18a whose outer diameter is reduced gradually from a large diameter portion in the base end portion side toward a small diameter portion in a tip part side thereof, and the base end portion of the tapered portion 18a is provided with a straight portion 18b whose outer diameter is constant. An annular groove formed in the straight portion 18b is provided with a seal member 25 for preventing a fluid from leaking outside from the valve body accommodating hole 16 through a gap between the guide hole 17 and the straight portion 18. The needle valve shaft 18 is formed with a screw hole 26, and this screw hole 26 is screwed to a male screw portion 27a provided to a tip portion of the screw shaft 27. A base end portion of the screw shaft 27 is provided with a large diameter joint portion 27b, and this joint portion 27b is connected with a main shaft 28 of the electric motor 20, and this main shaft 28 is fixed to the screw shaft 27 by a set screw 29. When the screw shaft 27 is rotated by the electric motor 20, the needle valve shaft 18 is reciprocally moved in the axial direction. The electric motor 20 is installed with a speed-reducing mechanism (not shown) for reducing the rotation of a rotor and transmitting the reduced rotation to the main shaft 28.

The valve body accommodating hole 16 is mounted with a valve body receiving member 30. This valve body receiving member 30 has a flange 30a engaged with the other end portion of the valve body accommodating hole 16, and a cylindrical portion 30b protruding toward a bottom wall of the valve body accommodating hole 16 from the flange 30a. This cylindrical portion 30b is formed with a cylindrical communicating hole 31 penetrating in the axial direction. This communicating hole 31 is opened toward the first port 11, and communicates with the first port 11 through a gap between the valve body receiving member 30 and the needle valve shaft 18. The cylindrical portion 30b is formed with a through-hole 32 for causing the communicating hole 31 to communicate with the second port 12. With this, the communicating hole 31 communicates with the first port 11 at one end portion thereof, and communicates with the second port 12 at the other end portion thereof through the through-hole 32.

An annular seal holder 33, which is tightly engaged with and fixed to an outer circumference surface 30c of the cylindrical portion 30b of the valve body receiving member 30, is mounted in the valve body accommodating hole 16. So as not to communicate use the first port 11 and the second port 12 to communicate with each other through the outside of the cylindrical portion 30b, a gap between the ports is blocked by this seal holder 33. The outer circumference surface of the seal holder 33 is provided with a seal member 34 for sealing an inner circumference surface of the valve body accommodating hole 16.

The needle valve shaft 18 is movably mounted in the axial direction in the communicating hole 31. One end portion side of the communicating hole 31 becomes a valve seat surface 35, with which a large diameter side part out of the tapered portion 18a of the needle valve shaft 18 is brought into contact. When the needle valve shaft 18 is driven in the axial direction by the electric motor 20, the gap between the tapered portion 18a and the valve seat surface 35 is changed so that a valve opening degree is adjusted. According to this valve opening degree, a flow rate of fluid flowing from one of the first port 11 and the second port 12 to the other port is adjusted. Consequently, this motorized needle value becomes a flow rate control valve or a throttle valve when used for controlling the flow rate of the fluid, and becomes a speed-control valve when used for adjusting the operation speed of an actuator.

In this motorized needle valve, when the first port 11 is used as a primary side port and the second port 12 is used as a secondary side port, the fluid flowing from the first port 11 is controlled in flow rate and made to flow out to the second port 12. On the other hand, when the second port 12 is used as the primary side port and the first port 11 is used as the secondary side port, the fluid flowing from the second port 12 is controlled in flow rate and made to flow out to the first port 11. In either usage mode, an axial thrust is applied to the needle valve shaft 18 in the direction toward the screw shaft 27, that is, in the valve opening direction by the fluid in the second port 12. This thrust is approximately equal to a value which is obtained by multiplying a sectional area of the needle valve shaft 18 by the pressure of the second port 12 or the first port 11.

In order to counteract the valve opening direction thrust applied to the needle valve shaft 18, the needle valve shaft 18 is provided with a pressure counteracting shaft 36. One end portion of this pressure counteracting shaft 36 is provided with a male screw 37 which is screwed to the other end portion of the screw hole 26 of the needle valve shaft 18. The pressure counteracting shaft 36 is screwed to the other end portion of the needle valve shaft 18, and both of them are tightly engaged with each other so that a leakage of the fluid toward the screw hole 26 is prevented. The other end portion side of the communicating hole 31 in the cylindrical portion 30b of the valve body receiving member 30 is formed with a large diameter hole 31a, and this large diameter hole 31a is slightly larger in diameter than one end portion side of the communicating hole 31. The other end portion of the pressure counteracting shaft 36 is provided with a pressure receiving piston 38 that slidably contacts with the inner circumference surface of the large diameter hole 31a. In the valve body receiving member 30, a pressure counteracting chamber 40 is partitioned between the pressure receiving piston 38 and the needle valve shaft 18, and the pressure counteracting chamber 40 communicates with the second port 12 through the through-hole 32.

The pressure counteracting shaft 36 is provided to the tip of the needle valve shaft 18. Since the fluid in the pressure counteracting chamber 40 which communicates with the second port 12 through the through-hole 32 mainly pressurizes and balances outer circumference surfaces of the pressure receiving piston 38 of the pressure counteracting shaft 36 and the tapered portion 18a, the axial thrust of the needle valve shaft 18 is small. Since an outer diameter of the pressure counteracting shaft 36 is slightly smaller than the smallest diameter of the tapered portion 18a, the fluid in the communicating hole 31 applies the thrust to the needle valve shaft 18 in the right direction in FIGS. 1 and 2, that is, in the valve opening direction, whereas the thrust is applied to the pressure receiving piston 38 in the opposite direction. Thus, the axial thrust applied to the needle valve shaft 18 in the valve opening direction is counteracted by the pressure counteracting shaft 36.

In this way, when the axial thrust applied to the needle valve shaft 18 in the valve opening direction is counteracted by the pressure counteracting shaft 36, since the axial thrust by the pressurized fluid is small at the time of driving the needle valve shaft 18 in the valve closing direction, the needle valve shaft 18 can be driven using the small-sized electric motor 20 with a small output torque. Furthermore, it is possible to reduce the size of the motorized needle valve and also to drive the needle valve with low power consumption. An annular groove formed on the outer circumference surface of the pressure receiving piston 38 is mounted with a seal member 39 for sealing between the pressure receiving piston 38 and the large diameter hole 31a of the communicating hole 31.

The pressure counteracting shaft 36 is formed with a long hole 41 which extends in the axial direction so as to penetrate through it in a radial direction. A rod 42 passed through the long hole 41 is fixed to the cylindrical portion 30b of the valve body receiving member 30 as a guide. When the screw shaft 27 is rotated so as to drive the needle valve shaft 18 in the axial direction, this rod 42 prevents the rotation of the needle valve shaft 18 and the pressure counteracting shaft 36 integrated with the needle valve shaft 18, and permits an axial movement of the needle valve shaft 18.

In order to fix the motorized needle valve to a predetermined fixing portion, the port block 10 and the valve case 14 are formed with mounting holes 43 which penetrate through it in the width direction of the housing 24 as shown in FIG. 1. Furthermore, the port block 10 and the valve case 14 are formed with fixing holes 44 which penetrate through it in the height direction of the housing 24 as shown in FIG. 2.

FIGS. 1 and 2 show a closed valve state in which the tapered portion 18a of the needle valve shaft 18 is brought into contact with the valve seat surface 35 of the communicating hole 31, and the communicating hole 31 is blocked by the needle valve shaft 18.

In order to open the communicating hole 31 under this state, a driving current is applied to the electric motor 20 so as to rotate the screw shaft 27 and drive the needle valve shaft 18 in the right direction in FIGS. 1 and 2, that is, in the valve opening direction. With this, a gap is formed between the tapered portion 18a and the valve seat surface 35, and the communicating hole 31 takes a valve opening state in which the first port 11 and the second port 12 communicate with each other. The valve opening degree is set by a position of the needle valve shaft 18 in the axial direction.

When the needle valve shaft 18 is driven in the valve closing direction so as to reduce the valve opening degree, the electric motor 20 is driven in the direction opposite to the valve opening direction. Although the valve opening direction thrust is applied to the needle valve shaft 18 by the pressure of the second port 12, since the needle valve shaft 18 is provided with the pressure counteracting shaft 36, a thrust which reduces the valve opening direction thrust so as to counteract this thrust is applied to the needle valve shaft 18 by the pressure counteracting shaft 36. Thus, the needle valve shaft 18 can be surely driven in the valve closing direction by the small-sized electric motor 20 with small output torque.

The motorized needle valve shown in FIGS. 1 to 3 is provided in a pneumatic circuit for supplying to an actuator such as a pneumatic cylinder with a compressed air as a working fluid, and is used as a flow rate control valve and a throttle valve for controlling a flow rate of the compressed air supplied to the actuator. In this motorized needle valve, an outer diameter of a straight portion 18b of the needle valve shaft 18 is about 8mm, and an outer diameter of the electric motor 20 has almost the same outer diameter as that of the needle valve shaft 18. Even when such small-sized electric motor 20 with a small output torque is used, the needle valve shaft 18 can be surely driven by counteracting the thrust applied to the needle valve shaft 18 in the valve opening direction by the pressure counteracting shaft 36.

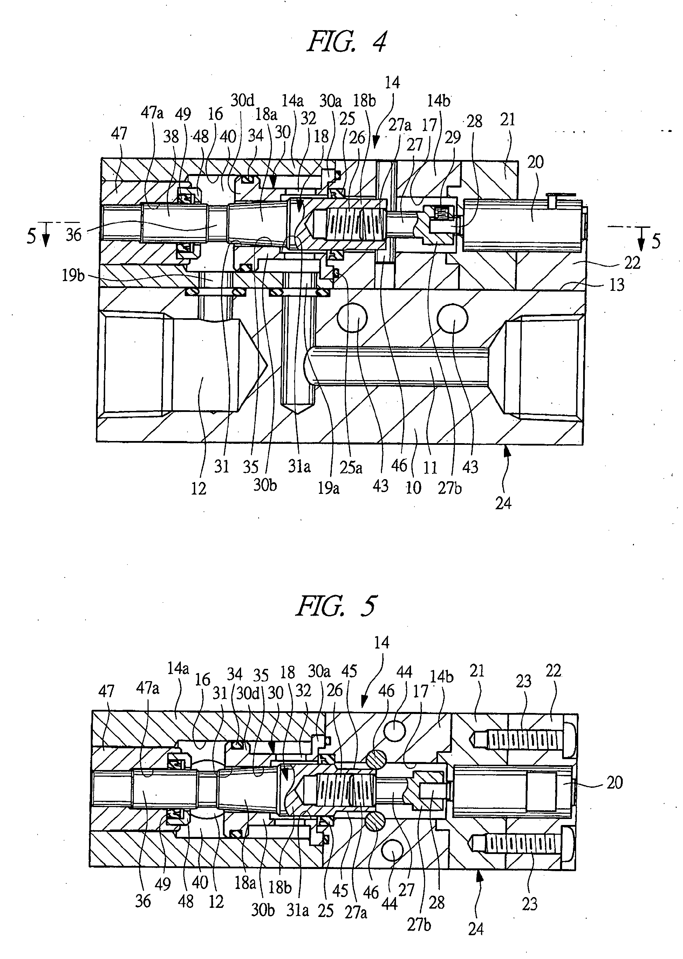

Next, a motorized needle valve shown in FIGS. 4 and 5 will be described. In FIGS. 4 and 5, members common to the above described motorized needle valve are denoted by the same reference numerals.

In this motorized needle valve, a valve case 14 is formed of two members of a first case piece 14a and a second case piece 14b. The case piece 14a is formed with a valve body accommodating hole 16, and the case piece 14b is formed with a guide hole 17. A valve body receiving member 30 mounted in the valve body accommodating hole 16 has a flange 30a, which is provided to the one end portion of the valve body receiving member 30 and tightly press-fitted in the case piece 14a, and an O ring 25a is sandwiched between the flange 30a and the second case piece 14b, and fixed to a housing 24. A communicating hole 31 is formed in a cylindrical portion 30b of the valve body receiving member 30. The communicating hole 31 communicates with a first port 11 through a through-hole 32 formed in the cylindrical portion 30b. The through-hole 32 is opened to a large diameter hole 31a of the communicating hole 31 of the cylindrical portion 30b.

The other end portion of the valve body receiving member 30 is provided with an annular seal protrusion portion 30d in such a way that a first port 11 and a second port 12 does not communicate with each other through the outside of the cylindrical portion 30b, and the communication between the first port and the second port is blocked by this annular seal protrusion portion 30d. An outer circumference surface of the annular seal protrusion portion 30d is provided with a seal member 34 for sealing an inner circumference surface of the valve body accommodating hole 16.

A straight portion 18b of the needle valve shaft 18 is formed with a bottomed screw hole 26, and a male screw portion 27a of a screw shaft 27 driven by an electric motor 20 is screwed into this screw hole 26. In order to prevent a fluid from leaking to the outside from the valve body accommodating hole 16 through a gap between the straight portion 18b and a guide hole 17, a valve case 14 is mounted with a seal member 25.

An outer circumference surface of the straight portion 18b of the needle valve shaft 18, as shown in FIG. 5, is formed with a flat surface 45 extending in the axial direction. The flat surface 45 cuts out the straight portion 18b at two places with its phase shifted by 180 degrees in a circumference direction, and the two flat surfaces 45 become parallel with each other to be formed on the needle valve shaft 18. Rods 46 brought into contact with the respective flat surfaces 45 are fixed as a guide to the case piece 14b. Two rods 46 are pointed in a direction orthogonal to the moving direction of the needle valve shaft 18 and fixed to the case piece 14b. When the screw shaft 27 is rotated so as to drive the needle valve shaft 18 in its axial direction, two rods 46 prevents the needle valve shaft 18 from being rotated around its axis and permits the needle valve shaft 18 to be moved in its axial direction.

The needle valve shaft 18 is integrally provided with the pressure counteracting shaft 36 which continues to the tapered portion 18a. This pressure counteracting shaft 36 is provided with a pressure receiving piston 38, and the pressure receiving piston 38 is slidably engaged in the axial direction with a sleeve 47 as a guide member provided in the case piece 14a. The pressure counteracting shaft 36 is guided so as to move in the axial direction by a guide hole 47a of the sleeve 47. In order to prevent a fluid from leaking from between the guide hole 47a of the sleeve 47 and the pressure counteracting shaft 36, the seal member 49 is mounted in a holder 48 fitted to the sleeve 47.

A pressure counteracting chamber 40 is formed between the valve body receiving member 30 and the sleeve 47. The second port 12 communicates with this pressure counteracting chamber 40 through a supply/discharge hole 19b. Consequently, though the fluid pressure of the second port 12 is in the pressure counteracting chamber 40, the pressure counteracting shaft 36 is integrated with the tapered portion 18a, and the fluid in the pressure counteracting chamber 40 acts mainly as a thrust directed toward the left direction in FIG. 4 to the pressure counteracting shaft 36 and a thrust directed toward the right direction to the tapered portion 18a, and these thrusts are mutually counteracted. Thus, an axial thrust applied to the needle valve shaft 18 is small. The outer diameter of the pressure receiving piston 38 approximately corresponds to the smallest diameter of the tapered portion 18a, and the tapered portion 18a is applied with a valve opening direction thrust by the fluid in the pressure counteracting chamber 40. However, a difference between the largest diameter and the smallest diameter of the tapered portion 18a is small, and a valve opening direction thrust applied to the needle valve shaft 18 at the time of closing the needle valve shaft 18 does not influence a valve closing operation by the electric motor 20. When the outer diameter of the pressure receiving piston 38 is made to correspond to the largest diameter of the tapered portion 18a, a counteracting force of the thrust applied to the tapered portion 18a in the valve opening direction can be increased.

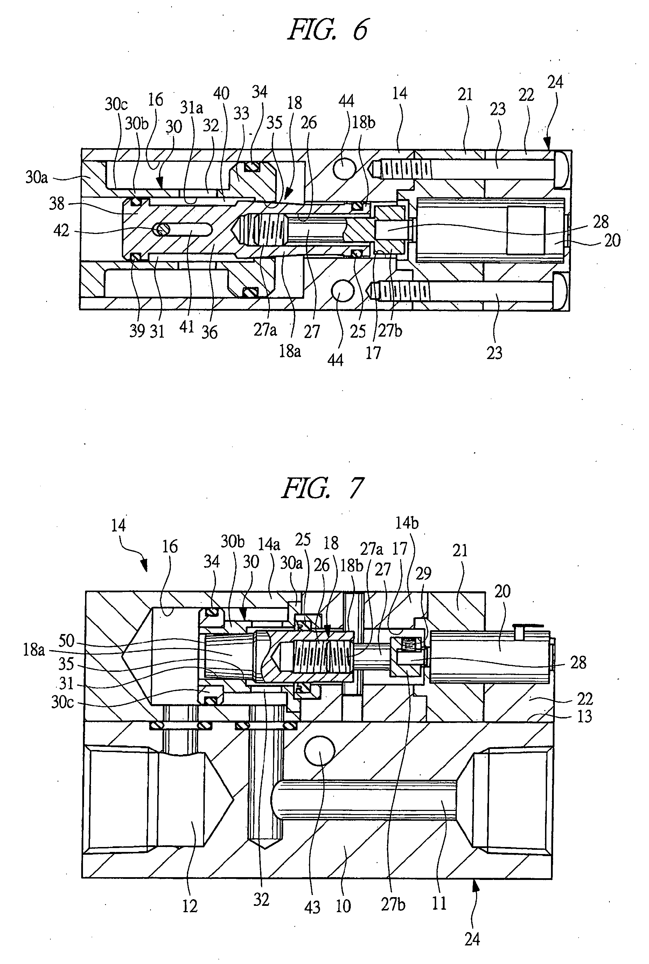

Next, a motorized needle valve shown in FIG. 6 will be described. In FIG. 6, a portion which corresponds to that shown in FIG. 2, in a motorized needle valve shown in FIGS. 1 to 3 is shown.

In the motorized needle valve shown in FIGS. 1 to 3, a seal holder 33 and a valve body receiving member 30 are separate parts, and the seal holder 33 is tightly engaged with the valve body receiving member 30. On the other hand, in the motorized needle valve shown in FIG. 6, the seal holder 33 is integrally provided with the valve body receiving member 30. Furthermore, in the motorized needle valve shown in FIGS. 1 to 3, a pressure receiving piston 38 and a needle valve shaft 18 are separate parts, and the needle valve shaft 18 is screwed to a male screw 37 of the pressure receiving piston 38. On the other hand, in the motorized needle valve shown in FIG. 6, the pressure receiving piston 38 is integrally provided with the needle valve shaft 18.

A large diameter portion and a small diameter portion in a tapered portion 18a of the needle valve shaft 18 shown in FIG. 6 are reversed in magnitude relation with those of the above described needle valve shaft 18. That is, the electric motor 20 side end portion of the tapered portion 18a is a small diameter portion, and the other end portion is a large diameter portion. Thus, the direction of the taper surface of the tapered portion 18a may be changed in design phase. As shown in FIG. 6, in an embodiment where the large diameter portion of the needle valve shaft 18 is provided with a pressure counteracting shaft 36, a valve closing direction thrust is applied to the needle valve shaft 18 toward the screw shaft 27 by the fluid in a pressure counteracting chamber 40, whereas a valve opening direction thrust is applied to the pressure receiving piston 38 by the fluid in the pressure counteracting chamber 40. Therefore, at the time of driving the needle valve shaft 18 in the valve opening direction, a large load is prevented from being applied to the electric motor 20. The valve case 14, the support block 21, and the fitting block 22 as shown in FIG. 2 are fitted to a port block 10 the same as that of the motorized needle valve as shown in FIG. 1, thereby constituting a housing 24.

FIG. 7 is a sectional view of a motorized needle valve of a comparative example. The basic structure of this motorized needle valve is the same as that of FIGS. 4 and 5. In FIG. 7, members common to members shown in FIGS. 4 and 5 are denoted by the same reference numerals.

As shown in FIG. 7, although the needle valve shaft 18 has the tapered portion 18a and the straight portion 18b, a pressure counteracting shaft is not provided with the needle valve shaft 18. Consequently, the fluid in the second port 12 applies pressure on an end face 50 of the needle valve shaft 18 and the surface of the tapered portion 18a, and a thrust is applied to the needle valve shaft 18 in the right direction in FIG. 7, that is, in the valve opening direction by the fluid. For this reason, at the time of driving the needle valve shaft 18 in the valve closing direction, the needle valve shaft 18 is driven by the electric motor 20 against the thrust applied to the needle valve shaft 18 by the fluid. In a trial product shown as a comparison example, the needle valve shaft 18 cannot be surely driven in the small-sized electric motor 20 having outer diameter approximately same as an outer diameter of the needle valve shaft 18.

In contrast, since the needle valve shaft 18 is provided with the pressure counteracting shaft 36 so that a fluid pressure is counteracted in an end face direction of the needle valve shaft 18, the needle valve shaft 18 can be surely driven by the small-sized electric motor 20.

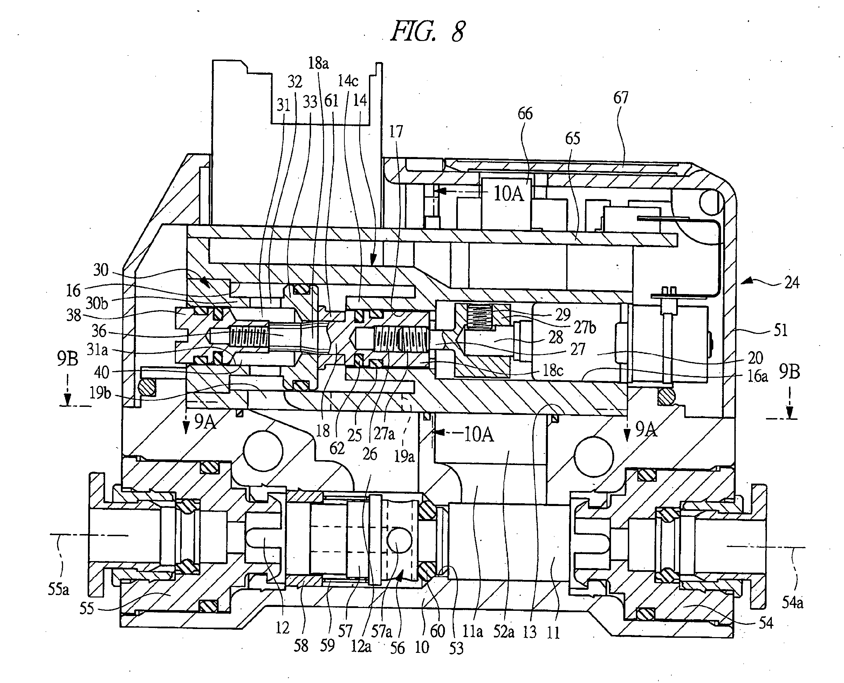

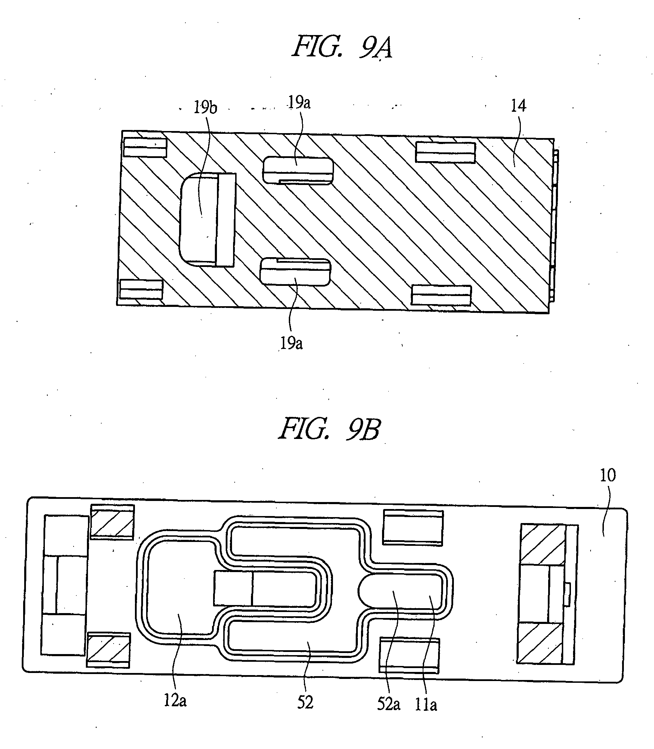

Next, a motorized needle valve corresponding to an embodiment of the present invention shown in FIGS. 8 to 10B will be described. A valve case 14 abuts on a fitting surface 13 so as to be fitted to a port block 10, and the valve case 14 is covered by a cover 51 fitted to the port block 10. A valve body receiving member 30 integrated with a seal holder 33 is installed in a valve body accommodating hole 16 of the valve case 14, similarly to a valve body receiving member 30 shown in FIG. 6. A through-hole 32 formed in a cylindrical portion 30b of the valve receiving member 30 communicates with a second port 12 through a communication chamber 12a of the second port 12 and a supply/discharge hole 19b formed in the valve case 14 as shown in FIG. 9A. On the other hand, a supply/discharge hole 19a formed in the valve case 14, as shown in FIG. 9B, communicates with a concave portion 52 formed at both sides of the port block 10. This concave portion 52 communicates with a communication chamber 11a through a through-hole 52a formed in the port block 10, and a first port 11 communicates with an end face of the valve body receiving member 30 through the supply/discharge hole 19a.

The first port 11 and the second port 12 are coaxially formed in the port block 10, and the ports 11 and 12 are directly connected by a direct-connecting hole 53. The first port 11 is fitted with a joint 54 to which a fluid-guiding pipe 54a is connected, and the second port 12 is fitted with a joint 55 to which a fluid-guiding pipe 55a is connected. In order that the direct-connecting hole 53 is closed so as to guide the fluid into a communicating hole 31 when the fluid is supplied to the second port 12 from the fluid-guiding pipe 55a, and the direct-connecting hole 53 is opened so as to directly guide the fluid into the second port 12 when the fluid is supplied to the first port 11 from the fluid-guiding pipe 54a, the port block 10 is mounted with a check valve 56.

The check valve 56 has a valve body 57 formed with a flow channel 57a through which the second port 12 and the communicating hole 31 communicate with each other. The valve body 57 is applied with a spring force in a direction to close the direct-connecting hole 53 by a compression coil spring 59 as a spring member mounted between a fixed ring 58 fixed to the port block 10 and the valve body 57. The valve body 57 is mounted with a seal material 60 so as to seal between the direct-connecting hole 53 and the valve body 57. For example, when this motorized needle valve is used for a fluid circuit (not shown) in which a fluid pressure cylinder and a fluid supply source are provided for linearly reciprocating a piston rod, there are some cases where the first port 11 is connected to a fluid supply source for use by a fluid-guiding pipe 54a, and the second port 12 is connected to a pressure chamber of a fluid pressure cylinder for use by a fluid-guiding pipe 55a. In this case, when the fluid supplied to the first port 11 from a fluid pressure source by the fluid-guiding pipe 54a is supplied to the pressure chamber of the fluid pressure cylinder, the fluid is supplied to the pressure chamber by penetrating the direct-connecting hole 53. On the other hand, the fluid discharged from the pressure chamber and returned to the second port 12 by the fluid-guiding pipe 55a flows into the communicating hole 31 with a flow rate thereof controlled by the needle valve shaft 18, and flows into the first port 11.

A tip of the needle valve shaft 18 installed in the valve body receiving member 30 is fitted with a pressure counteracting shaft 36, and the pressure counteracting shaft 36 is provided with a pressure receiving piston 38. The valve case 14 is integrally provided with a cylindrical portion 14c smaller in diameter than the valve body accommodating hole 16. This cylindrical portion 14c is slidably engaged with a connection end portion 18c in the axial direction provided in the base end of the needle valve shaft 18. This connection end portion 18c is larger in diameter than a straight portion 18b, and has approximately the same outer diameter as that of the pressure receiving piston 38. The straight portion 18b is fitted with a spacer 61, and when the tapered portion 18a of the needle valve shaft 18 is brought into contact with a valve seat surface 35, the spacer 61 is brought into contact with the end face of the valve body receiving member 30. The connection end portion 18c is provided with a wear ring 62 and a seal member 25.

The connection end portion 18c is formed with a screw hole 26, and a male screw portion 27a of a screw shaft 27 is screwed into this screw hole 26. The valve case 14 is formed with a motor accommodating hole 16a, and a main shaft 28 of the electric motor 20 installed in this motor accommodating hole 16a is connected to a joint portion 27b provided in the base end portion of the screw shaft 27.

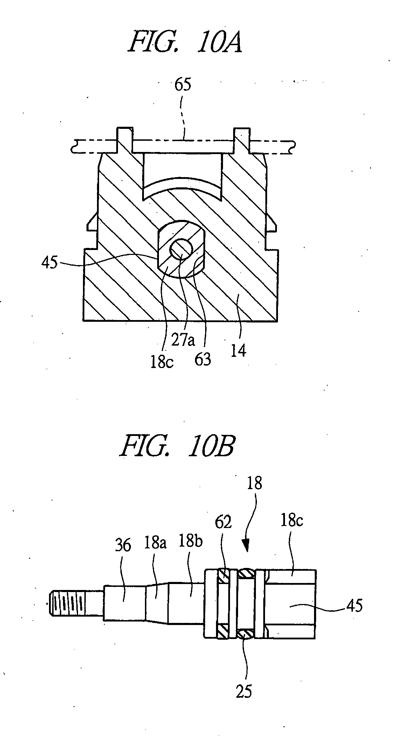

The outer circumference surface of the connection end portion 18c of the needle valve shaft 18, as shown in FIG. 10B, is formed with a flat surface 45 extending in the axial direction. The flat surface 45 cuts out the connection end portion 18c at two places with its phase shifted by 180 degrees in a circumference direction, so that the two flat surfaces 45 become parallel with each other to be formed on the connection end portion 18c of the needle valve shaft 18. The valve case 14, as shown in FIG. 10A, is formed with each of guide surface 63 as a guide, each of the guide surfaces 63 being brought into contact with each of the flat surfaces 45. Each of the guide surfaces 63 is pointed in a direction orthogonal to a moving direction of the needle valve shaft 18. Each of the guide surfaces 63 prevents the rotation of the needle valve shaft 18 and permits its axial movement when the screw shaft 27 is rotated and the needle valve shaft 18 is driven in the axial direction.

As shown in FIG. 8, a circuit board 65 connected with a feeder cable of the electric motor 20 is installed in a cover 51. The circuit board 65 is fitted with a connector 66 electrically connected to the feeder cable, and the connector 66 is connected to a supply cable connected to a power supply. The cover 51 is fitted with an opening/closing lid 67, and when this opening/closing lid 67 is opened, the connector 66 is exposed to the outside.

A motorized needle valve shown in FIG. 8 is also, similarly to each of the above described motorized needle valve, provided with the pressure counteracting shaft 36 on a tip of the needle valve shaft 18, and this pressure counteracting shaft 36 is installed with the pressure receiving piston 38. The pressure receiving piston 38 continues to a valve seat surface 35 in a communicating hole 31, and contacts an inner circumference surface of a large diameter hole 31a which is larger in diameter than the valve seat surface 35, and faces a tapered portion 18a through a pressure counteracting chamber 40. Consequently, the fluid in the pressure counteracting chamber 40 communicating with the second port 12 through the through-hole 32 mainly pressurizes and approximately balances the pressure receiving piston 38 of the pressure counteracting shaft 36 and an outer circumference surface of the tapered portion 18a, and an axial thrust of the needle valve shaft 18 is small. The fluid in the communicating hole 31 applies a thrust to the needle valve shaft 18 in the right direction in FIG. 8, that is, in a valve opening direction, whereas a thrust is applied to the pressure receiving piston 38 in an opposite direction. Thus, the axial thrust applied to the needle valve shaft 18 in the valve opening direction is counteracted by the pressure counteracting shaft 36.

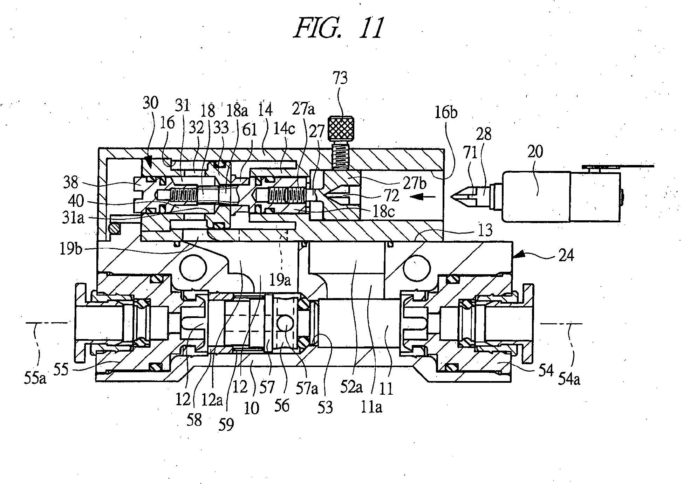

Next, a motorized needle valve corresponding to another embodiment of the present invention shown in FIG. 11 will be described. This motorized needle valve has a port block 10 and a valve case 14 which are the same as the port block 10 and the valve case 14 shown in FIG. 8 in basic structure. A housing 24 is formed of the port block 10 and the valve case 14.

The valve case 14 is formed with a motor fitting hole 16b. An electric motor 20 is detachably mounted in the motor fitting hole 16b. A main shaft 28 of the electric motor 20 is provided with a cross-shaped engaging portion 71, and a joint portion 27b of a screw shaft 27 is formed with an engaging hole 72 into which the engaging portion 71 is inserted. Thus, when the electric motor 20 is inserted into the motor fitting hole 16b and the engaging portion 71 is engaged with the engaging hole 72, the main shaft 28 is coupled to the screw shaft 27. When the electric motor 20 is detached from the motor fitting hole 16b, the engaging portion 71 is separated from the engaging hole 72, and coupling between the main shaft 28 and the screw shaft 27 is released.

In the motorized needle valve shown in FIG. 11, since the electric motor 20 can be detached from the valve case 14 of the housing 24, after adjusting the valve opening degree of one motorized needle valve, the electric motor 20 is detached from the valve case 14, and the valve opening degree of the other motorized needle valve can be adjusted. In order to prevent the screw shaft 27 from rotating after detaching the electric motor 20, a lock screw 73 is fitted to the valve case 14 as a rotation-preventing mechanism. When the screw shaft 27 is driven by the electric motor 20, the lock screw 73 is loosened so as not to clamp the screw shaft 27, and before the electric motor 20 is detached from the housing, the lock screw 73 is fastened so as to clamp the screw shaft 27.

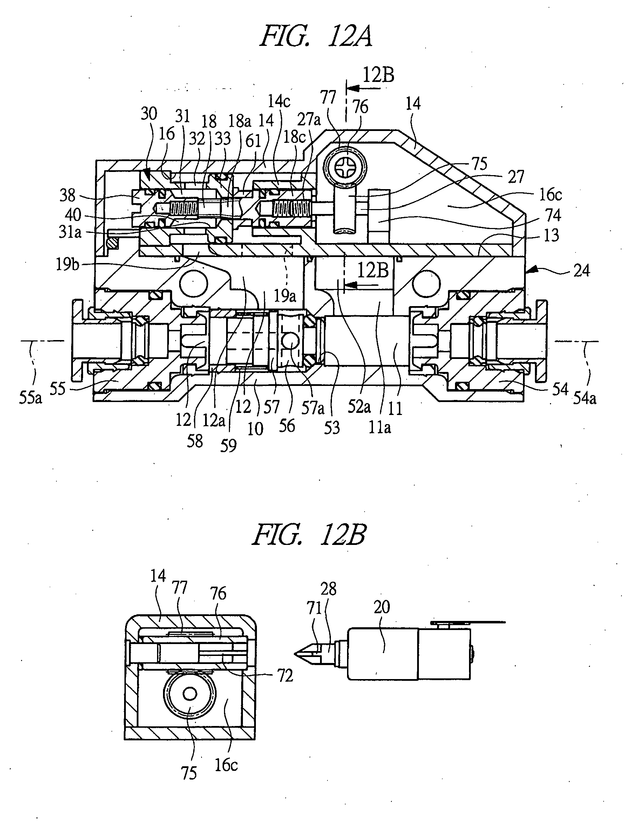

Next, a motorized needle valve corresponding to another embodiment of the present invention shown in FIGS. 12A and 12B will be described. In the motorized needle valve shown in FIGS. 12A and 12B, a gear accommodating chamber 16c formed in a valve case 14 is arranged with a bearing 74 for supporting a screw shaft 27, and the screw shaft 27 is provided with a worm wheel 75. The valve case 14 is rotatably installed with a driving shaft 76 which extends in a direction orthogonal to the screw shaft 27 as shown in FIG. 12B. This driving shaft 76 is provided with a worm 77 which engages with the worm wheel 75. The driving shaft 76 is formed with an engaging hole 72 into which a cross-shaped engaging portion 71 provided to a main shaft 28 of an electric motor 20 penetrates. Thus, when the electric motor 20 is pushed into the valve case 14 so that the engaging portion 71 is made to engage with the engaging hole 72 from a side surface of the valve case 14, the main shaft 28 is connected to the driving shaft 76. When the electric motor 20 is detached from the valve case 14, the engaging portion 71 is separated from the engaging hole 72 so that a coupling between the main shaft 28 and the driving shaft 76 is released.

A speed-reducing mechanism having the worm 77 and the worm wheel 75 transmits the rotation of the worm 77 to the work wheel 75. On the other hand, even when a rotative force is applied to the worm wheel 75, the rotation of the worm wheel 75 is not transferred to the worm 77, and the speed-reducing mechanism having the worm 77 and worm wheel 75 serves as a rotation-preventing mechanism. Thus, even when the electric motor 20 is detached, the rotation of the screw shaft 27 is prevented, and an axial movement of the needle valve shaft 18 is prevented.

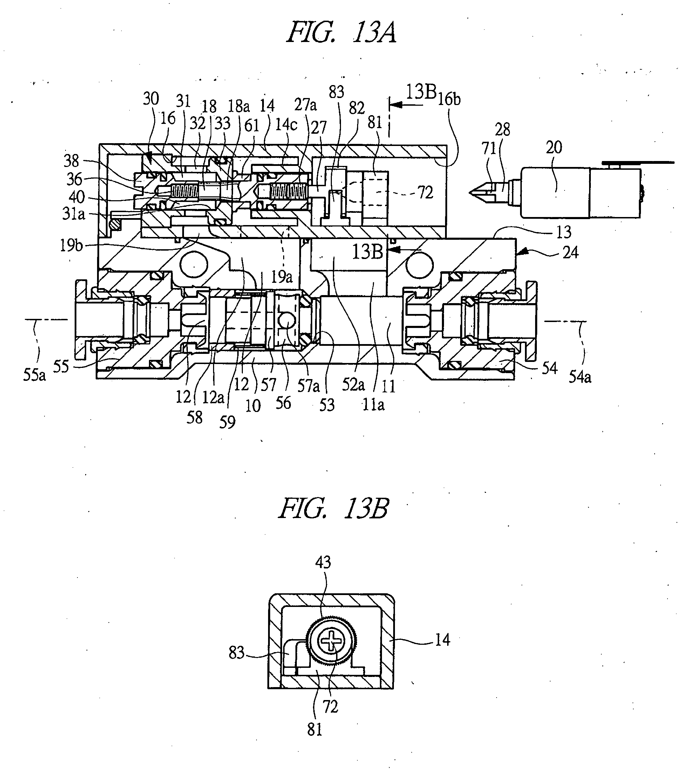

Next, a motorized needle valve corresponding to another embodiment of the present invention shown in FIGS. 13A and 13B will be described. In the motorized needle valve shown in FIGS. 13A and 13B, a motor fitting hole 16b formed in a valve case 14 is arranged with a bearing 81 for supporting a screw shaft 27. The screw shaft 27, similarly to the screw shaft 27 shown in FIG. 11, is formed with an engaging hole 72 into which an engaging portion 71 provided in a main shaft 28 of an electric motor 20 penetrates. Thus, the electric motor 20 can be put into a state in which it is made to be coupled to the screw shaft 27, and a state in which the coupling thereof is released.

The screw shaft 27 is provided with a latchet wheel 82, and the valve case 14 adjoining to the latchet wheel 82 is fitted with a latchet claw 83. By an engagement between the latchet claw 83 and the latchet wheel 82, a rotational resistance is applied to the screw shaft 27. A rotative force of the main shaft 28 by the electric motor 20 is set greater than a rotational resistance applied to the screw shaft 27. With this, when the screw shaft 27 is rotated by the main shaft 28, the latchet claw 83 slides on a crest-shaped uneven portion in an outer circumference surface of the latchet wheel 82 in a circumferential direction. On the other hand, under a state in which the electric motor 20 is detached from a housing 24, since the screw shaft 27 is applied with a resistance force of the latchet claw 83, the rotation of the screw shaft 27 is controlled. In this way, a rotation-preventing mechanism for controlling the rotation of the screw shaft 27 is formed by the latchet wheel 82 and the latchet claw 83.

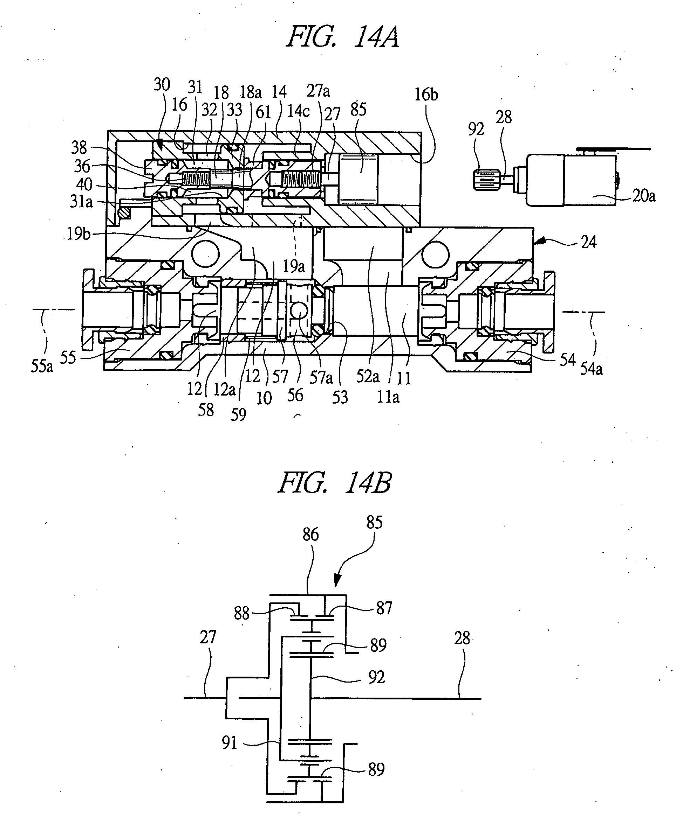

Next, another embodiment of a motorized needle valve of the present invention shown in FIGS. 14A and 14B will be described. In the motorized needle valve shown in FIGS. 14A and 14B, a motor fitting hole 16b is fitted with a speed reduction unit 85 composed of a planet gear mechanism, and an output shaft of this speed reduction unit 85 is coupled to a screw shaft 27. Each of the above described electric motors 20 is incorporated with the speed reduction unit 85, whereas an electric motor 20a shown in FIGS. 14A and 14B is not incorporated with the speed reduction unit 85. Thus, the length of the electric motor 20a in the axial direction is shorter than those of the above described electric motors 20.

The speed reduction unit 85, as shown in FIG. 14B, includes a fixed internal gear 87 fitted to a unit case 86 and a movable internal gear 88 rotatably installed in the unit case 86, and the movable internal gear 88 is coupled to the screw shaft 27. The fixed internal gear 87 and the movable internal gear 88 are engaged with a plurality of planet gears 89, and each of the planet gears 89 is rotatably mounted on a rotatable carrier 91. A main shaft 28 of the electric motor 20 is fixed with a sun gear 92, and when the electric motor 20 is inserted into a motor fitting hole 16b, the sun gear 92 is engaged with each of the planet gears 89.

Since the fixed internal gear 87 and the movable internal gear 88 are slightly different from each other in the number of gear teeth, the gears function as a transfer gear and are respectively engaged with the planet gears 89. Hence, the rotation of the sun gear 92 of the main shaft 28 is reduced in speed and transmitted to the screw shaft 27. The speed reduction unit 85 includes the sun gear 92 and constitutes a speed-reducing mechanism called also as a magical gear reducer. This speed reduction unit 85 becomes a rotation-preventing mechanism for controlling the rotation of the screw shaft 27 since the planet gear 89 does not rotate even if a rotative force is applied to the movable internal gear 88.

In the motorized needle valves shown in FIGS. 11 to 14B, the structure of the needle valve shaft 18 is the same as that shown in FIG. 8, and the axial thrust applied to the needle valve shaft 18 in the valve opening direction is counteracted by the counteracting shaft 36. Consequently, when the needle valve shaft 18 is driven in the valve closing direction, since the axial thrust by the pressured fluid is small, the needle valve shaft 18 can be driven by using the small-sized electric motor 20 with a small output torque. Furthermore, the motorized needle valve can be reduced in size, and the needle valve can be driven with low power consumption.

In the motorized needle valve shown in FIGS. 11 to 14B, similarly to the motorized needle valve shown in FIG. 6, the direction of the tapered portion 18a is reversed from side to side in the drawing, and the large diameter side of the tapered portion 18a may be provided to the tip portion of the needle valve shaft 18.

In an embodiment where the electric motor 20 for driving the needle valve shaft 18 is detachably mounted for the housing 24 as shown in FIGS. 11 to 14B, the electric motor 20 can be detached from the housing 24 after controlling the valve opening degree. In an embodiment where the electric motor 20 is detached from the housing 24, the rotation-preventing mechanism for controlling the rotation of the screw shaft 27 is installed in the housing 24 as shown in FIGS. 11 to 14B. The rotation-preventing mechanism is not limited to the illustrated structure.

### INDUSTRIAL APPLICABILITY

This motorized needle valve shaft is used for controlling a flow rate of fluid such as compressed air flowing in a fluid circuit.

## Claims

1. A motorized needle valve comprising:
a housing (24) formed with a first port (11) communicating with one end portion of a cylindrical communicating hole (31), and a second port (12) communicating with the other end portion of the communicating hole;
a needle valve shaft (18) which is movably mounted in an axial direction in the communicating hole, and which is formed with a tapered portion (18a) changed in outer diameter in a direction from one end portion side toward the other end portion side of the communicating hole, and a gap between the tapered portion and a valve seat surface (35) of the communicating hole is changed according to a position thereof in the axial direction;
a screw shaft (27) having: a joint portion (27b) connected to a main shaft of an electric motor (20); and a screw portion (27a) screwed to one end portion of the needle valve shaft, when the screw shaft is rotated by the electric motor, the needle valve shaft is moved in the axial direction with respect to the screw shaft by the rotation of the screw shaft;
a guide (63) provided in the housing, and the guide prevents the needle valve shaft from being rotated around its axis and permits the needle valve shaft to be moved in the axial direction; and
a pressure counteracting shaft (36) provided to the other end portion of the needle valve shaft, and provided with a pressure receiving piston (38) which counteracts an axial thrust applied to the needle valve shaft toward the screw shaft by the fluid in one of the first and second ports;
a valve body receiving member (30) having a cylindrical portion (30b) formed with the communicating hole, the valve body receiving member being mounted in a valve body accommodating hole (16) which is formed between the first port and the second port and makes these ports communicate with each other, and
a seal member (34) mounted to the valve body receiving member, the seal member blocking the communication between the first port and the second port,
wherein
the needle valve shaft has a spacer (61) capable of coming in contact with one end face of the valve body receiving member.

2. The motorized needle valve according to claim 1, wherein the pressure receiving piston is slidably arranged in the valve body receiving member, and wherein the valve body receiving member is formed with a through-hole (32) through which a pressure counteracting chamber (40) formed in the valve body receiving member between the pressure receiving piston and the tapered portion communicates with one of the first and second ports,
one end portion of the pressure counteracting shaft is screwed to said the other end portion of the needle valve shaft,
an inner circumference surface forming one end part of the communicating hole is defined as the valve seat surface, and the remaining part of the communicating hole is defined as a large diameter hole (31 a) and larger in diameter than said one end part of the communicating hole,
the pressure receiving piston is provided to the other end portion of the pressure counteracting shaft, and slidably contacts with an inner circumference surface of the large diameter hole.

3. The motorized needle valve according to claim 1, wherein a sleeve (47) is mounted in coaxial relationship with the valve body receiving member in a pressure counteracting chamber which is formed in the housing and which communicates with one of the first and second ports, and the sleeve is slidably arranged with the pressure receiving piston.

4. The motorized needle valve according to any one of claims 1 to 3, wherein the electric motor is installed in the housing.

5. The motorized needle valve according to any one of claims 1 to 3, wherein the electric motor is detachably mounted in the housing.

6. The motorized needle valve according to claim 5, wherein a rotation-preventing mechanism (73, 76, 77) for preventing the screw shaft from being rotated around its axis when the electric motor is not attached to the housing is provided to the housing.

7. The motorized needle valve according to any one of claims 1 to 6, wherein a direct-connecting hole (53) for directly connecting the first port and the second port is formed in the housing, and a check valve (56) is mounted in the direct-connecting hole, wherein the direct-connecting hole is closed so as to guide a fluid to the communicating hole when the fluid is supplied from one of the ports, and the direct-connecting hole is opened so as to directly guide the fluid to one of the ports through the direct-connecting hole when the fluid is supplied from the other of the ports.

8. The motorized needle valve according to any one of claims 1 to 7, wherein a flat surface (45) extending in the axial direction is formed on an outer circumference surface of the needle valve shaft, and the guide for preventing the needle valve shaft from being rotated around its axis and permitting the needle valve shaft to be moved in its axial direction is formed of a guide surface (63) brought into contact with the flat surface formed in the housing.

## Patentansprüche

1. Motorisiertes Nadelventil, Folgendes umfassend:
ein Gehäuse (24), das mit einem ersten Anschluss (11) gebildet ist, der mit einem Endabschnitt einer zylinderförmigen Verbindungsöffnung (31) in Verbindung steht, und mit einem zweiten Anschluss (12), der mit dem anderen Endabschnitt der Verbindungsöffnung in Verbindung steht,
einen Nadelventilschaft (18), der in einer Axialrichtung beweglich in die Verbindungsöffnung montiert und mit einem sich verjüngenden Abschnitt (18a) gebildet ist, dessen Außendurchmesser sich in eine Richtung von einer Endabschnittseite zur anderen Endabschnittseite der Verbindungsöffnung ändert, wobei sich ein Spalt zwischen dem sich verjüngenden Abschnitt und einer Ventilsitzfläche (35) der Verbindungsöffnung gemäß dessen Position in der axialen Richtung verändert,
einen Schraubschaft (27), der Folgendes aufweist: einen Verbindungsabschnitt (27b), der mit einer Hauptwelle eines Elektromotors (20) verbunden ist, und einen Schraubabschnitt (27a), der auf einen Endabschnitt des Nadelventilschafts geschraubt wird, wenn der Schraubschaft durch den Elektromotor gedreht wird, wobei der Nadelventilschaft durch die Drehung des Schraubschafts im Verhältnis zum Schraubschaft in die axiale Richtung bewegt wird,
eine Führung (63), die im Gehäuse bereitgestellt ist, wobei die Führung verhindert, dass der Nadelventilschaft um seine Achse gedreht wird, und es ermöglicht, dass der Nadelventilschaft in die axiale Richtung bewegt wird, und
einen dem Druck entgegenwirkenden Schaft (36), der am anderen Endabschnitt des Nadelventilschafts bereitgestellt und mit einem druckaufnehmenden Kolben (38) ausgestattet ist, der einer axialen Schubkraft entgegenwirkt, die durch das Fluid im ersten oder im zweiten Anschluss auf den Nadelventilschaft hin zum Schraubschaft ausgeübt wird,
ein den Ventilkörper aufnehmendes Element (30), das einen zylinderförmigen Abschnitt (30b) aufweist, der mit der Verbindungsöffnung gebildet ist, wobei das den Ventilkörper aufnehmende Element in einem dem Ventilkörper Platz bietenden Öffnung (16) montiert ist, die zwischen dem ersten Anschluss und dem zweiten Anschluss gebildet ist und diese Anschlüsse miteinander verbindet, und
ein Dichtungselement (34), das in das den Ventilkörper aufnehmende Element montiert ist, wobei das Dichtungselement die Verbindung zwischen dem ersten Anschluss und dem zweiten Anschluss sperrt,
wobei der Nadelventilschaft einen Abstandshalter (61) aufweist, die in der Lage ist, mit einer Endfläche des den Ventilkörper aufnehmenden Elements in Kontakt zu kommen.

2. Motorisiertes Nadelventil nach Anspruch 1, wobei der druckaufnehmende Kolben gleitfähig in dem den Ventilkörper aufnehmenden Element angeordnet ist und wobei das den Ventilkörper aufnehmende Element mit einer Durchgangsöffnung (32) gebildet ist, durch die hindurch eine dem Druck entgegenwirkende Kammer (40), die zwischen dem druckaufnehmenden Kolben und dem sich verjüngenden Abschnitt im den Ventilkörper aufnehmenden Element gebildet ist, mit dem ersten oder dem zweiten Abschnitt verbunden ist,
wobei ein Endabschnitt des dem Druck entgegenwirkenden Schafts an den anderen Endabschnitt des Nadelventilschafts geschraubt ist,
wobei eine innen umlaufende Fläche, die einen Endabschnitt der Verbindungsöffnung bildet, als die Ventilsitzfläche definiert ist und der verbleibende Teil der Verbindungsöffnung als eine Öffnung mit großem Durchmesser (31a) definiert ist und im Durchmesser größer ist als ein Endabschnitt der Verbindungsöffnung,
wobei der druckaufnehmende Kolben am anderen Endabschnitt des dem Druck entgegenwirkenden Schafts bereitgestellt ist und gleitfähig mit einer innen umlaufenden Fläche der Öffnung mit großem Durchmesser in Kontakt tritt.

3. Motorisiertes Nadelventil nach Anspruch 1, wobei eine Hülse (47) in koaxialem Verhältnis mit dem den Ventilkörper aufnehmenden Element in eine dem Druck entgegenwirkende Kammer montiert ist, die im Gehäuse gebildet ist und die mit dem ersten oder dem zweiten Anschluss in Verbindung steht, und die Hülse gleitfähig mit dem druckaufnehmenden Kolben angeordnet ist.

4. Motorisiertes Nadelventil nach einem der Ansprüche 1 bis 3, wobei der Elektromotor in das Gehäuse eingebaut ist.

5. Motorisiertes Nadelventil nach einem der Ansprüche 1 bis 3, wobei der Elektromotor lösbar in das Gehäuse montiert ist.

6. Motorisiertes Nadelventil nach Anspruch 5, wobei im Gehäuse ein Drehungsverhinderungsmechanismus (73, 76, 77) zum Verhindern der Drehung des Schraubschafts um seine Achse, wenn der Elektromotor nicht am Gehäuse angebracht ist, bereitgestellt ist.

7. Motorisiertes Nadelventil nach einem der Ansprüche 1 bis 6, wobei im Gehäuse eine Direktverbindungsöffnung (53) zum direkten Verbinden des ersten Anschlusses und des zweiten Anschlusses gebildet ist und in die Direktverbindungsöffnung ein Sperrventil (56) montiert ist, wobei die Direktverbindungsöffnung derart geschlossen ist, dass ein Fluid zur Verbindungsöffnung geführt wird, wenn das Fluid von einem der Anschlüsse zugeführt wird, und die Direktverbindungsöffnung derart geöffnet ist, dass das Fluid direkt durch die Direktverbindungsöffnung zu einem der Anschlüsse geführt wird, wenn das Fluid vom anderen der Anschlüsse zugeführt wird.

8. Motorisiertes Nadelventil nach einem der Ansprüche 1 bis 7, wobei auf einer außen umlaufenden Fläche des Nadelventilschafts eine ebene Fläche (45) gebildet ist, die sich in der axialen Richtung erstreckt, wobei die Führung, die verhindert, dass der Nadelventilschaft um seine Achse gedreht wird, und die es ermöglicht, dass der Nadelventilschaft in die axiale Richtung bewegt wird, aus einer Führungsfläche (63) gebildet ist, die in Kontakt mit der im Gehäuse gebildeten ebenen Fläche gebracht wird.

## Revendications

1. Robinet à pointeau motorisé comprenant :
un boîtier (24) formé avec un premier orifice (11) communiquant avec une première partie d'extrémité d'un trou de communication cylindrique (31), et un deuxième orifice (12) communiquant avec l'autre partie d'extrémité du trou de communication,
une tige de robinet à pointeau (18) qui est montée avec possibilité de déplacement dans une direction axiale dans le trou de communication, et qui est formée avec une partie inclinée (18a) dont le diamètre extérieur change dans une direction à partir de la première partie d'extrémité vers l'autre partie d'extrémité du trou de communication, et un intervalle entre la partie inclinée et une surface de siège de robinet (35) du trou de communication change en fonction de sa position dans la direction axiale,
une tige filetée (27) ayant : une partie de jonction (27b) connectée à un arbre principal d'un moteur électrique (20), et une partie filetée (27a) vissée sur une première partie d'extrémité de la tige de robinet à pointeau, lorsque la tige filetée est entraînée en rotation par le moteur électrique, la tige de robinet à pointeau est déplacée dans la direction axiale par rapport à la tige filetée par la rotation de la tige filetée,
un guide (63) prévu dans le boîtier, et le guide empêche la tige de robinet à pointeau d'être entraînée en rotation autour de son axe et permet à la tige de robinet à pointeau d'être déplacée dans la direction axiale, et
une tige de réaction à la pression (36) prévue sur l'autre partie d'extrémité de la tige de robinet à pointeau, et dotée d'un piston de réception de pression (38) qui s'oppose à une poussée axiale appliquée à la tige de robinet à pointeau en direction de la tige filetée par le fluide dans l'un des premier et deuxième orifices,
un élément de réception de corps de robinet (30) ayant une partie cylindrique (30b) formée avec le trou de communication, et l'élément de réception de corps de robinet étant monté dans un trou d'accueil de corps de robinet (16) qui est formé entre les premier et deuxième orifices et amène ces orifices à communiquer l'un avec l'autre, et
un élément d'étanchéité (34) monté sur l'élément de réception de corps de robinet, l'élément d'étanchéité bloquant la communication entre les premier et deuxième orifices,
dans lequel
la tige de robinet à pointeau comprend un élément d'écartement (61) capable de venir en contact avec une face d'extrémité de l'élément de réception de corps de robinet.

2. Robinet à pointeau motorisé selon la revendication 1, dans lequel le piston de réception de pression est disposé avec possibilité de glissement dans l'élément de réception de corps de robinet, et dans lequel l'élément de réception de corps de robinet est formé avec un trou traversant (32) à travers lequel une chambre opposée à la pression (40) formée dans l'élément de réception de corps de robinet entre le piston de réception de pression et la partie inclinée communique avec l'un du premier et du deuxième orifices,
une première partie d'extrémité de la tige opposée à la pression est vissée sur ladite autre partie d'extrémité de la tige de robinet à pointeau,
une surface circonférentielle intérieure formant une première partie d'extrémité du trou de communication est définie comme la surface de siège de robinet, et la partie restante du trou de communication est définie comme un trou à grand diamètre (31a) et de diamètre plus grand que ladite première partie d'extrémité du trou de communication,
le piston de réception de pression est prévu au niveau de l'autre partie d'extrémité de la tige opposée à la pression, et est en contact avec possibilité de glissement avec une surface circonférentielle intérieure du trou à grand diamètre.

3. Robinet à pointeau motorisé selon la revendication 1, dans lequel un manchon (47) est monté suivant une relation coaxiale avec l'élément de réception de corps de robinet dans une chambre opposée à la pression qui est formée dans le boîtier et qui communique avec l'un du premier et du deuxième orifices, et le manchon est disposé avec possibilité de glissement avec le piston de réception de pression.

4. Robinet à pointeau motorisé selon l'une quelconque des revendications 1 à 3, dans lequel le moteur électrique est installé dans le boîtier.

5. Robinet à pointeau motorisé selon l'une quelconque de revendications 1 à 3, dans lequel le moteur électrique est monté de manière amovible dans le boîtier.

6. Robinet à pointeau motorisé selon la revendication 5, dans lequel un mécanisme empêchant une rotation (73, 76, 77) destiné à empêcher la tige filetée d'être entraînée en rotation autour de son axe lorsque le moteur électrique n'est pas fixé au boîtier est prévu dans le boîtier.

7. Robinet à pointeau motorisé selon l'une quelconque des revendications 1 à 6, dans lequel un trou de connexion directe (53) destiné à connecter directement le premier orifice et le deuxième orifice est formé dans le boîtier, un clapet anti retour (56) est monté dans le trou de connexion directe, dans lequel le trou de connexion directe est fermé de manière à guider un fluide vers le trou de communication lorsque le fluide est fourni à partir d'un des orifices, et le trou de connexion directe est ouvert de manière à guider directement le fluide vers l'un des orifices à travers le trou de connexion directe lorsque le fluide est fourni depuis l'autre des orifices.

8. Robinet à pointeau motorisé selon l'une quelconque des revendications 1 à 7, dans lequel une surface plate (45) s'étendant dans la direction axiale est formée sur une surface circonférentielle extérieure de la tige de robinet à pointeau, et le guide destiné à empêcher le robinet à pointeau d'être entraîné en rotation autour de son axe et à permettre à la tige de robinet à pointeau d'être déplacée dans sa direction axiale est constitué d'une surface de guidage (63) amenée en contact avec la surface plate formée dans le boîtier.
